# FASCICULE DE BREVET EUROPEEN

(11) **EP 2 563 870 B1**
(45) Date de publication et mention de la délivrance du brevet: **19.04.2017**
(21) Numéro de dépôt: 11709715.4
(22) Date de dépôt: 22.03.2011
(51) Int. Cl.: C09D 183/04, C08G 77/38, B05D 5/08, C09J 7/02, C09D 183/07

(54) **COMPOSITION SILICONE RETICULABLE POUR LA REALISATION DE REVETEMENTS ANTI-ADHERENTS POUR SUPPORTS SOUPLES ET ADDITIF PROMOTEUR D'ACCROCHAGE CONTENU DANS CETTE COMPOSITION**
VERNETZBARE SILIKONZUSAMMENSETZUNG ZUR HERSTELLUNG VON NICHT KLEBRIGEN BESCHICHTUNGEN FÜR FLEXIBLE SUBSTRATE UND IN DIESER ZUSAMMENSETZUNG ENTHALTENER HAFTFÖRDENDER ZUSATZ
CROSS-LINKABLE SILICONE COMPOSITION FOR THE PRODUCTION OF NON-STICK COATINGS FOR FLEXIBLE SUBSTRATES AND AN ATTACHMENT-PROMOTING ADDITIVE CONTAINED IN SAID COMPOSITION

(30) Priorité: 22.03.2010 FR 1001125
(43) Date de publication de la demande: 06.03.2013
(73) Titulaire: Bluestar Silicones France, 69003 Lyon (FR)
(72) Inventeur: MARROT, Sébastien, F-69006 Lyon (FR); WHITE, John, F-69620 Letra (FR); FEDER, Michel, 69100 Villeurbanne (FR); MAGD, Frédéric, 69160 Tassin La Demi Lune (FR)
(74) Mandataire: Mekki, Boualem
(86) Numéro de dépôt international: PCT/EP2011/054333
(87) Numéro de publication internationale: WO 2011/117230

(56) Documents cités:
- WO-A1-2008/000771
- WO-A2-2007/015944
- US-A- 4 077 943
- US-A- 5 789 084
- US-A1- 2004 161 618

## Description

Le domaine de l'invention est celui des compositions silicones réticulables ou réticulées, susceptibles d'être utilisées, notamment, pour former un revêtement ou film hydrofuge et anti-adhérent pour supports souples par exemple en papier ou analogues et sous forme de films en polymère naturel ou synthétique.

Ces compositions silicones anti-adhérentes, durcissables sont appliquées sur de tels supports, de manière à faciliter l'enlèvement de matières adhésives contrecollées de manière réversible sur ces supports.

Ces compositions silicones liquides sont appliquées sur les films supports dans des dispositifs industriels d'enduction comportant des cylindres fonctionnant à très grande vitesse (par exemple 600 m/min). Il est clair que dans ces procédures d'enduction à très grande vitesse, la viscosité de la composition silicone liquide d'enduction doit être minutieusement adaptée aux conditions opératoires d'enduction.

En pratique, le taux de dépôt de silicone anti-adhérent est compris entre 0,1 et 2 de préférence 0,3 et 1 g/m², ce qui correspond à des épaisseurs de l'ordre du micromètre. Une fois appliquée sur le support souple, la composition silicone réticule pour former un revêtement solide en silicone (e.g. élastomère) anti-adhérent et/ou hydrofuge.

Compte tenu des cadences industrielles d'enduction à très haute vitesse, la cinétique de réticulation doit être extrêmement rapide pour conduire à une réticulation correcte, c'est-à-dire que les films silicones anti-adhérents doivent être suffisamment réticulés pour pouvoir remplir au mieux leur fonction d'anti-adhérence et posséder les qualités mécaniques souhaitables. L'appréciation de la qualité de la réticulation du revêtement silicone anti-adhérent peut notamment se faire au travers du dosage des composés extractibles non réticulés, dont la quantité doit être la plus réduite possible. Par exemple, le taux d'extractibles est préférablement inférieur à 5%, dans des conditions industrielles normales de réticulation.

L'anti-adhérence de la face externe libre du revêtement silicone s'exprime au travers de la force de décollement, qui doit être faible et contrôlée, pour l'élément destiné à être disposé sur le support revêtu par le film silicone anti-adhérent. Classiquement, cet élément peut être la face adhésive d'une étiquette ou d'un ruban du même nom.

Ainsi, outre cette anti-adhérence faible et contrôlée, l'adhérence du revêtement silicone sur son support doit être très élevée. Cette propriété d'adhérence s'apprécie par exemple à l'aide du test de métier de "rub off", qui consiste à frotter la surface du revêtement avec le doigt et à mesurer le nombre de passages successifs avant dégradation du revêtement.

Il importe également que ces compositions silicones d'enduction, réticulables par hydrosilylation e.g. Si-H / Si-Vi, aient une durée de vie à température ambiante la plus longue possible, lorsqu'elles sont sous forme de bain d'enduction dans les machines industrielles d'enduction.

Les supports souples revêtus d'un film silicone anti-adhérent peuvent être par exemple:
- un papier ou un film polymère du type polyoléfine (polychlorure de vinyle (PVC), PolyPropylène ou Polyéthylène) ou de type polyester (PolyEthylèneTéréphtalate ou PET),
- un ruban adhésif dont la face interne est enduite d'une couche d'adhésif sensible à la pression et dont la face externe comporte le revêtement silicone anti-adhérent ;
- ou un film polymère de protection de la face adhésive d'un élément autocollant ou adhésif sensible à la pression.

Pour des raisons évidentes de sécurité de manipulation et de toxicité, on vise dans la présente invention des compositions silicone avantageusement sans solvant.

Au-delà de cet aspect, il est préférable que, d'un point de vue économique, ces compositions silicone d'enduction avantageusement sans solvant puissent être utilisées sur des équipements industriels standards d'enduction adaptés à des supports souples en papier. Cela suppose que lesdites compositions aient une viscosité relativement basse (par exemple inférieure ou égale à 1000 mPa.s) pour faciliter leur manipulation, pour avoir une bonne qualité d'enduction et pour réduire le problème de formation de brouillard ("misting") qui apparaît aux très grandes vitesses d'enduction industrielles.

Une autre contrainte à prendre en compte pour la formulation des compositions silicone liquides d'enduction est que le coefficient de friction du revêtement d'élastomère silicone réticulé soit contrôlable, de manière à faciliter les opérations d'enroulement/déroulement des supports souples en polymère (notamment en polyester tel que le PET), utiles comme "liners" pour étiquettes.

Il est important pour cette application que le revêtement silicone élastomère ne nuise ni à l'aspect lisse, ni à la transparence, ni aux propriétés mécaniques du support. L'aspect lisse et les propriétés mécaniques sont nécessaires pour un échenillage de précision à très grande vitesse. La transparence est souhaitable pour l'inspection de la régularité du film à très grande vitesse, à l'aide de détecteurs optiques.

Dans un revêtement anti-adhérent, le contrôle de la force de décollement est important. Avantageusement, ce contrôle doit être effectif à basse et à haute vitesse. L'équilibre entre les forces de décollement à basse vitesse et les forces de décollement à haute vitesse est appelé communément le profil d'anti-adhérence.

Au-delà des propriétés évoquées ci-dessus pour tous supports il convient avant tout que l'adhérence ou l'accrochage du revêtement silicone sur le support (traduite par la résistance à l'abrasion "rub-off") soit optimale et stable dans le temps, ceci même en présence de l'adhésif de l'étiquette.

Or, dans le cadre de l'invention, on s'intéresse plus spécialement à l'optimisation de ce paramètre d'adhérence ou d'accrochage du revêtement silicone sur le support, sans préjudice des autres spécifications.

On connaît par la demande EP1594693-A2, des compositions silicone anti-adhérentes ayant une adhésion améliorée sur supports papier ou polymère et comprenant des polyorganosiloxanes linéaires alcénylés M^{VI} ₂₋₅ D₅₀₋₁₀₀₀ T_{a'''≥0} M_{0-0,5}, des polyorganosiloxanes linéaires à motifs hydrogénosiloxyle (≡Si-H), un catalyseur au platine, un inhibiteur de réticulation, et, à titre d'additif promoteur d'accrochage, un des polyorganosiloxanes de type MDₓM porteur de greffons fonctionnels de type époxy, oxirane ou carboxy. Plus précisément, cet additif peut être du type M[D^{AGE}]ₓD'M [AGE=allylglycidyléther] ou M[D^{alcoxysilyl}]ₓ[D^{carboxy}]ₓD'M, avec D'= motif hydrogénosiloxyle (≡Si-H). Cet additif présente l'inconvénient majeur de ne pouvoir être formulé avec les huiles réticulantes classiques à motifs hydrogénosiloxyles. En effet, lorsque ce type d'additif est formulé avec une huile silicone réticulante à motifs hydrogénosiloxyles, il apparait des phénomènes de troubles et de démixion dans la formulation.

Dans ce contexte, la présente invention a pour objectif essentiel de proposer de nouvelles compositions silicones liquides d'enduction, avantageusement sans solvant, réticulables en revêtement anti-adhérent et/ou hydrofuge pour support souple, de manière instantanée et conduisant à des revêtements silicones réticulés de très bonne qualité, en particulier en termes d'accrochage/adhérence sur le support (pas de phénomène de "rub-off") et de profil d'anti-adhérence (force de décollement à haute vitesse suffisamment élevée), ces dernières propriétés résultant notamment d'un additif promoteur d'accrochage.

Un autre objectif essentiel de l'invention est de proposer de nouvelles compositions silicones liquides d'enduction, avantageusement sans solvant, réticulables rapidement en revêtement anti-adhérent et/ou hydrofuge pour supports souples, et comprenant un additif promoteur d'accrochage à la fois performant et sans effet néfaste sur la conservation desdites compositions.

Un autre objectif essentiel de l'invention est de proposer de nouvelles compositions silicones liquides d'enduction, additivées par un promoteur d'accrochage perfectionné, avantageusement sans solvant, réticulables rapidement en revêtement anti-adhérent et/ou hydrofuge pour supports souples, tels que des papiers ou des films polymères du type polyoléfine (polychlorure de vinyle (PVC), PolyPropylène ou Polyéthylène) ou de type polyester (PolyEthylèneTéréphtalate -PET-).

Un autre objectif essentiel de l'invention est de proposer de nouvelles compositions silicones liquides d'enduction, additivées par un promoteur d'accrochage perfectionné, permettant de préparer un revêtement réticulé sur un souple ayant:
▪ d'une part, une réticulation suffisante pour avoir des propriétés mécaniques et d'adhérence du coating convenables,
▪ et, d'autre part, un faible taux d'extractibles pour une bonne permanence des propriétés antiadhérentes favorable en particulier pour la préparation et la l'utilisation des étiquettes adhésives issues de ces complexes.

Un autre objectif essentiel de l'invention est de proposer de nouvelles compositions silicones liquides d'enduction, additivées par un promoteur d'accrochage perfectionné, avantageusement sans solvant, réticulables en revêtement anti-adhérent et/ou hydrofuge pour supports souples, cette réticulation s'effectuant rapidement à température modérée, ces compositions étant par ailleurs dotées de longues durées de vie en bain, à température ambiante.

Un autre objectif essentiel de l'invention est de proposer de nouvelles compositions silicone liquides d'enduction, additivées par un promoteur d'accrochage perfectionné, réticulables en revêtement anti-adhérent et/ou hydrofuge pour support souple, faciles à préparer et économiques.

Un autre objectif essentiel de l'invention est proposer un nouveau promoteur d'accrochage perfectionné, au moins aussi performant que les promoteurs connus et sans effet nuisible sur la conservation de la composition.

Un autre objectif essentiel de l'invention est de proposer un nouveau procédé de réalisation d'un revêtement, hydrofuge et anti-adhérent sur un support souple (par exemple un papier ou un polymère), ayant plus spécialement des propriétés améliorées d'accrochage ("rub-off") en particulier grâce à un additif promoteur d'accrochage, tout en satisfaisant par ailleurs aux exigences de contrôle du profil de la force de décollement, de faible taux d'extractibles et de coefficient de friction approprié, le tout avec une composition de départ avantageusement sans solvant, de viscosité compatible avec le revêtement à haute vitesse sans "misting".

Un autre objectif essentiel de l'invention est de proposer un nouveau procédé pour augmenter l'accrochage (i.e la résistance à l'abrasion) d'un revêtement silicone réticulé/durci, hydrofuge et anti-adhérent, appliqué sur tout support (e.g. papier ou polymère), et obtenu à partir d'une composition silicone susceptible de réticuler/durcir par polyaddition et comprenant un additif promoteur d'adhérence perfectionné et performant.

Un autre objectif essentiel de l'invention est de proposer un nouveau support souple (e.g. papier ou polymère), présentant au moins un revêtement, hydrofuge, anti-adhérent, à base d'une composition silicone réticulée/durcie par polyaddition, et présentant d'excellentes propriétés d'accrochage ("rub-off"), de contrôle du profil de la force de décollement, de dureté (% extractibles) et de coefficient de friction approprié, le tout en partant d'une composition de départ avantageusement sans solvant, de viscosité compatible avec le revêtement à haute vitesse sans "misting".

Ces objectifs, parmi d'autres, sont atteints par la présente invention qui concerne en premier lieu une nouvelle composition silicone **A** comprenant une base silicone **B** susceptible de réticuler ou durcir par polyaddition caractérisée en ce qu'elle comprend au ins un additif **X** réticulant et promoteur d'accrochage comprenant au moins un yorganosiloxane **C** constitué des motifs siloxyles **(1.1)** à **(1.3)** de formules suivantes: 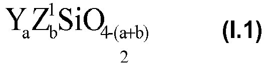 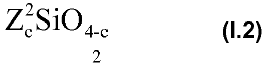 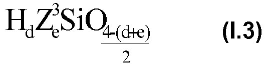 dans lesquelles :
- a= 1 ou 2, b= 0, 1 ou 2 et a+b= 1, 2 ou 3;
- c = 1, 2 ou 3
- d= 1 ou 2, e= 0, 1 ou 2 et d+e= 1, 2 ou 3
- Y représente indépendamment un groupe hydrocarboné époxyfonctionnel comprenant éventuellement un ou plusieurs hétéroatomes tel qu'un atome d'oxygène, de préférence ayant de 2 à 20 atomes de carbone inclus, et, plus préférentiellement encore choisi parmi le groupe constitué par un alkylglycidyléther, un époxyalkyle linéaire, ramifié et/ou cyclique, un époxyalcényle linéaire, ramifié et/ou cyclique et un glycidyl-ester d'acide carboxylique;
- Z¹, Z² et Z³ représentent, indépendamment les uns des autres, un groupe hydrocarboné monovalent ayant de 1 à 30 atomes de carbone comprenant éventuellement un ou plusieurs hétéroatomes et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle,
- ledit polyorganosiloxane **C** comprenant, par molécule, au moins un motif siloxyle **(1.1)** porteurs de groupes hydrocarbonés époxyfonctionnels et au moins trois motifs siloxyles **(I.3)** porteurs de groupes hydrogénosiloxyles, et
- la teneur en motifs siloxyles **(I.1)** est comprise entre 10 et 80 mmol pour 100 g de polyorganosiloxane **C**, et plus préférentiellement comprise entre 20 et 60 mmol pour 100g de polyorganosiloxane **C.**

Il est du mérite des inventeurs d'avoir mis au point un nouvel additif **X** réticulant et promoteur d'accrochage particulièrement efficace comprenant un polyorganosiloxane **C** comprenant :
- des motifs siloxyles fonctionnalisé époxy, et
- au moins trois motifs hydrogénosiloxyles.

Ainsi, il a été découvert de manière tout à fait fortuite et inattendue, qu'en maintenant la teneur en motifs siloxyles fonctionnalisé époxy **(1.1)** du polyorganosiloxane **C** telle que revendiquée alors l'additif selon l'invention ne présente plus de problème de formation de turbidité et de démixion lorsque celui est formulé avec des huiles silicones réticulantes standard et couramment utilisée dans le domaine technique de l'invention.

Il présente aussi l'avantage de se conserver de manière prolongée, dans un état liquide, non gélifié, propre à être utilisé dans une composition à déposer sur un support pour former un revêtement anti-adhérent.

Il est à noter que les propriétés d'accrochage sur support sont d'autant plus positives, qu'elles perdurent suffisamment longtemps, au moins quelques jours à quelques semaines, dans des conditions sévères d'humidité et/ou de température. Cette pérennité est d'autant plus remarquable qu'elle s'observe également lorsque le revêtement anti-adhérent est en contact avec l'adhésif, en particulier lorsque celui-ci est un acrylique.

Grâce à l'invention, les revêtements obtenus ont non seulement un excellent accrochage ("rub-off"), mais sont également dotés d'une force de décollement suffisamment élevée à grande vitesse et de bonnes propriétés mécaniques et physiques (aspect lisse, transparence et bon coefficient de friction).

Les performances atteintes grâce à l'invention en termes de qualité de la réticulation par polyaddition : réactivité/niveau de réticulation/cinétique, sont tout à fait intéressantes, comme en témoigne les faibles taux d'extractibles obtenus, pour ce qui concerne la réactivité et le niveau de réticulation.

Le revêtement obtenu est particulièrement adhérent sur le support, permet d'apporter la propriété d'anti-adhérence ("release") vis-à-vis des adhésifs types adhésifs sensibles à la pression, et présente une excellente résistance mécanique au contact prolongé avec ces adhésifs, y compris acryliques.

Ces caractéristiques avantageuses sont particulièrement exploitables pour réaliser l'anti-adhérence de supports souples par exemple papier ou polymère, utiles, par exemple, comme "liners" d'étiquettes autocollantes (adhésif sensible à la pression), se présentant sous forme de rouleaux ou de bobines de films e.g. fabriqués à très grande vitesse.

Ceci est d'autant plus intéressant que ces résultats sont obtenus avec une composition silicone, dont le comportement rhéologique de la composition silicone n'est pas affecté (pas trop visqueuse), de sorte qu'elle est parfaitement apte à être enduite sur tout support et notamment sur tout support souple et qu'elle est peu ou pas sujette au "misting" dans des conditions industrielles d'enduction.

En outre, les compositions silicones d'enduction selon l'invention peuvent avantageusement être "sans solvant". Cela signifie qu'elles sont exemptes de solvant et, en particulier, sans solvant organique. On conçoit aisément les avantages que cela procure s'agissant de l'hygiène et de la sécurité.

Selon un mode de réalisation préféré, la teneur en motifs siloxyles **(1.3)** est inférieure ou égale à 1,6 mole pour 100 g de polyorganosiloxane **C** et de préférence compris entre 0,1 et 1,5 mole pour 100 g de polyorganosiloxane **C.**

Selon un autre mode de réalisation préféré, le nombre **N1** de motifs siloxyles **(1.1)** porteurs de groupes hydrocarbonés époxyfonctionnels et le nombre **N3** de motifs siloxyles **(I.3)** répondent aux conditions suivantes :
- 1 ≤ **N1 ≤** 10 et de préférence 1 ≤ **N1 ≤** 5, et
- 3 ≤ **N3 ≤** 20 et de préférence 5 ≤ **N3 ≤**20

Il est particulièrement avantageux que le nombre total **N** de motifs siloxyles **(1.1)** à **(I.3)** du polyorganosiloxane **C** soit compris entre 10 et 25.

De préférence, le polyorganosiloxane **C** a une viscosité (à 25°C) comprise entre 5 et 100 mPa.s et de préférence entre 5 et 50 mPa.s.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

De préférence, pour le motif siloxyle **(1.1)** Y est choisi parmi le groupe constitué par les groupements **(R-1)** à **(R-4)** de formules suivantes :

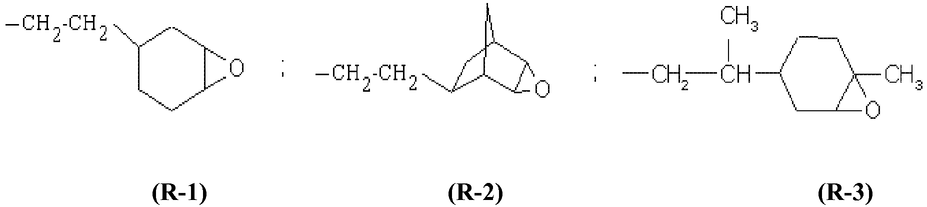

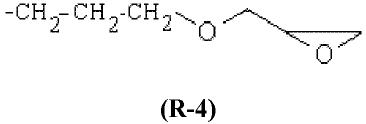

Selon un mode de réalisation particulièrement préféré, le motif siloxyle **(1.1)** Y est le groupement **(R-4)** de formule suivante :

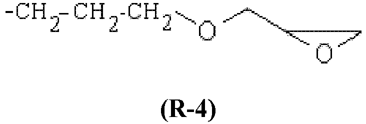

Dans tout le présent document, on se référera à des éléments de nomenclature classique pour désigner les motifs siloxyle M, D, T, Q des polyorganosiloxanes. A titre d'ouvrage de référence, on peut citer : NOLL " Chemistry and Technology of Silicones ", chapitre 1.1, page 1-9, Academic Press, 1968 - 2ème édition.

Pour améliorer encore les performances d'accrochage du polyorganosiloxane **C,** lorsque le motif siloxyle **(1.1)** est choisi parmi le groupe constitué par les groupements :

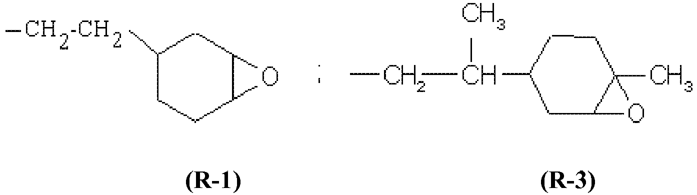

l'additif **X** réticulant et promoteur d'accrochage peut comprendre au moins un photoamorceur (e.g. cationique), de préférence choisi parmi les borates d'onium, plus préférentiellement parmi les borates de iodonium et/ou les boranes.

A titre d'exemple de photoamorceur, on peut citer celui qui correspond à la formule :

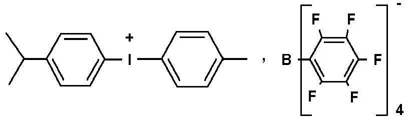

Pour plus de détails sur les borates d'onium appropriés, on se référera, par exemple, aux demandes de brevet ou brevets suivants: US-B-6,864,311; US-B-6,291,540; US-B-5,468,902.

Le photoamorceur est avantageusement dilué dans un solvant protique, par exemple l'alcool isopropylique. Le taux de dilution est e.g. compris entre 10 et 30 %, en particulier égal à 20 % +/- 2.

Dans le cas où la composition comprend un photoamorceur, le revêtement peut être soumis à une exposition thermique et/ou actinique, par exemple UV, pour accélérer la réaction.

Pour plus de détails sur les boranes appropriés, on se référera, par exemple, aux demandes de brevet ou brevets suivants : US-B-6,743,883; US-A-2004-0048975.

Selon un mode de réalisation préféré, l'additif **X** promoteur d'accrochage est un mélange limpide et homogène qui comprend par rapport au poids total de l'additif **X:**
- de 1 à 100 parties en poids d'au moins un polyorganosiloxane **C,** et
- de 99 à 0 parties en poids d'au moins une huile silicone réticulante **D** comprenant par molécule, au moins trois atomes d'hydrogène liés au silicium.

De préférence, la base silicone **B** comprend :
(A) au moins un polyorganosiloxane alcénylée **E** comprenant au moins deux motifs siloxyles **(I.4)** de formule suivante : 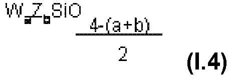
   - dans laquelle :
      - a= 1 ou 2, b= 0, 1 ou 2 et a+b= 1, 2 ou 3;
      - W représente indépendamment un groupe alcényle, de préférence ayant de 2 à 6 atomes de carbone et, plus préférentiellement encore un groupe vinyle ou allyle, et
      - Z représente représentent, indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle,
(B) éventuellement au moins huile silicone réticulante **D'** comprenant par molécule, au moins trois atomes d'hydrogène liés au silicium,
(C) au moins un catalyseur **F** de polyaddition, de préférence un composé d'au moins un métal appartenant au groupe du platine;
(D) éventuellement au moins un inhibiteur de réticulation **G ;**
(E) éventuellement un système modulateur d'adhérence **H ;**
(F) éventuellement au moins un diluant **I**;
(G) éventuellement au moins un additif anti-brouillard **J**,
(H) éventuellement au moins une résine polyorganosiloxane **K**, et
(I) éventuellement au moins un polyorganosiloxane **L** non fonctionnalisé constitués des motifs siloxyles **(I.5)** de formule : 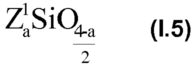 dans laquelle :
   - a= 0, 1, 2 ou 3,
   - Z¹ représente, indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle,

Les huiles silicones réticulantes **D** et **D'** sont de préférence des polyorganosiloxanes comportant des motifs siloxyle de formules **(1.6)** et éventuellement **(I.7)** suivantes: 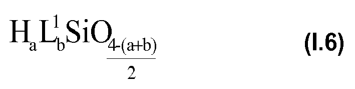 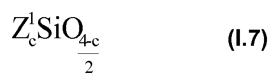 dans laquelle :
- a= 1 ou 2, b= 0, 1 ou 2 et a+b= 1, 2 ou 3;
- H représente un atome d'hydrogène,
- L¹ représente, indépendamment, un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle, et
- c=0, 1, 2 ou 3,
- Z¹ représente, indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle

La viscosité dynamique nd (à 25° C) de ces huiles silicones réticulantes **D** et **D'** sont supérieur ou égale à 5, de préférence supérieur ou égale à 10 et, plus préférentiellement encore, sont comprises entre 20 et 1000 mPa.s.

Les huiles silicones réticulantes **D** et **D'** peuvent présenter une structure linéaire, ramifiée ou cyclique. Le degré de polymérisation est supérieur ou égal à 2. Plus généralement, il est inférieur à 5 000.

Des exemples de motifs hydrogénosiloxyle de formule **(1.6)** sont :
M' : H(CH₃)₂SiO_{1/2},
D' : HCH₃SiO_{2/2}, et
D' avec groupement phénylé: H(C₆H₅)SiO_{2/2}.

Des exemples d'huiles silicones réticulantes **D** et **D'** sont :
- M₂'DₓDy' : les diméthylpolysiloxanes à extrémités hydrogénodiméthylsilyle, poly(diméthylsiloxane) (méthylhydrogénosiloxy) a,ro-d iméthyl hyd rogéno-siloxane,
- les copolymères à motifs diméthyl-hydrogénométhylpolysiloxanes (diméthyl) à extrémités triméthylsilyle,
- M₂'DₓDy' : les copolymères à motifs diméthyl-hydrogénométhylpolysiloxanes à extrémités hydrogénodiméthylsilyle,
- M₂Dx' : les hydrogénométhylpolysiloxanes à extrémités triméthylsilyle,
- D'₄ : les hydrogénométhylpolysiloxanes cycliques,

Avec x et y étant des nombres entiers ou décimaux (valeur moyenne) variant suivant la structure utilisée, déterminés suivant les techniques usuelles du domaine technique.

Il est avantageux que le polyorganosiloxane alcénylée **E** ait une viscosité (à 25° C) au moins égale à 10 mPa.s, de préférence comprise entre 50 et 1.000 mPa.s.

Le polyorganosiloxane alcénylée **E** peut présenter une structure linéaire, ramifiée ou cyclique. Son degré de polymérisation est, de préférence, compris entre 2 et 5 000. Des exemples de motifs siloxyle de formule **(I.4)** sont le motif vinyldiméthylsiloxane, le motif vinylphénylméthylsiloxane et le motif vinylsiloxane.

Des exemples de polyorganosiloxanes **(I.4)** sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques.

Les catalyseurs **F** de polyaddition sont également bien connus. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur **F** généralement préféré est le platine. Dans ce cas, la quantité pondérale de catalyseur **F,** calculée en poids de platine-métal, est généralement comprise entre 2 et 400 ppm, de préférence entre 5 et 200 ppm basée sur le poids total des polyorganosiloxanes **C, D, D'** et **E.**

Un des avantages de la composition selon l'invention est que l'on peut utiliser un taux très bas en catalyseur de type platine, c'est-à-dire à des taux voisin de 30 ppm basé sur le poids total des polyorganosiloxanes **C, D, D'** et **E.**

Selon un mode de réalisation particulier, les quantités des constituants sont telles que le rapport molaire [≡SiH]/[≡SiAlcényle] est compris entre 1 et 7 et de préférence entre 1 et 5 avec :
- [SiH]= nombre total de mole de motifs siloxyles comprenant un atome d'hydrogène liés au silicium, et
- [SiAlcényle] = nombre total de mole de motifs siloxyles comprenant un radical alcényle liés au silicium.

L'inhibiteur de réticulation **G** (ou ralentisseur de la réaction d'addition) peut, quant à lui, être choisi parmi les composés suivants :
- un polyorganosiloxanes, avantageusement cycliques, et substitués par au moins un alcényle, le tétraméthylvinyltétrasiloxane étant particulièrement préféré,
- la pyridine,
- les phosphines et les phosphites organiques,
- les amides insaturés,
- les maléates alkylés
- et les alcools acétyléniques.

Ces alcools acétyléniques, (cf. FR-B-1 528 464 et FR-A-2 372 874), qui font partie des bloqueurs thermiques de réaction d'hydrosilylation préférés, ont pour formule :

(R¹)(R²)C(OH)-C≡CH

formule dans laquelle :
- R¹ est un radical alkyle linéaire ou ramifié, ou un radical phényle ;
- R² est un atome d'hydrogène, un radical alkyle linéaire ou ramifié, ou un radical phényle ;
- les radicaux R¹, R² et l'atome de carbone situé en a de la triple liaison pouvant éventuellement former un cycle ; et
- le nombre total d'atomes de carbone contenu dans R¹ et R² étant d'au moins 5, de préférence de 9 à 20.

Lesdits alcools sont, de préférence, choisis parmi ceux présentant un point d'ébullition supérieur à 250°C. On peut citer à titre d'exemples :
- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-3 pentadécyne-1 ol-3.

Ces alcools α-acétyléniques sont des produits du commerce.

Un tel inhibiteur de réticulation est présent à raison de 3 000 ppm au maximum, de préférence à raison de 100 à 2000 ppm par rapport au poids total des organopolysiloxanes polyorganosiloxanes **C, D, D'** et **E.**

Le système modulateur d'adhérence **H** est sélectionné parmi les systèmes connus. Il peut s'agir de ceux décrits dans le brevet français FR-B-2 450 642, le brevet US -B-3 772 247 ou la demande de brevet européen EP-A-0 601 938. A titre d'exemples, on peut citer les modulateurs à base :
∘ de 96 à 85 parties en poids d'au moins une résine polyorganosiloxane (A) de type : MD^{Vi}Q, MM^{Vi}Q, MD^{Vi}T, M[M^{Hexényle}]Q, ou M[M^{Allyloxypropyle}]Q,
∘ de 4 à 15 parties en poids d'au moins une résine (B) de type: MD'Q, MDD'Q, MDT', MQ, ou MDQ.

Avec
- T' : HsiO_{3/2},
- D' : H(CH₃)SiO_{2/2},
- M : (CH₃)₃SiO_{1/2}
- Q : SiO_{4/2}
- D : (CH₃)₂SiO_{2/2}
- D^{Vi} : (CH₃)(Vinyl)SiO_{2/2}
- M : (CH₃)₃SiO_{1/2}
- M^{Vi} : (CH₃)₂(Vinyl)SiO_{1/2}
- M^{Héxényle} : (CH₃)₂(hexényle)SiO_{1/2}

La composition peut également inclure un autre additif promoteur d'accrochage. Ce dernier est de préférence choisi parmi les silanes époxy-fonctionnels, de préférence dans le groupe comprenant :
- le (3,4-époxycyclohexyl)éthyltriéthoxy-silane [Coatosil® 1770],
- le Tris(3-(triméthoxysilyl)propyl)isocyanurate [A-Link 597],
- le (gammaglycidoxypropyle)triméthoxysilane [Dynasilan® GLYMO],
- le (gamma méthacryloxypropyle)triméthoxysilane [Dynasilan® MEMO],
- des composés silicones comportant à la fois des groupements SiVi et des groupements époxy fonctionnels, et
- leurs mélanges.

Les concentrations adaptées de cet autre additif promoteur d'accrochage sont, par exemple, comprises entre 0,5 et 5%, de préférence entre 1 et 3% en poids par rapport au poids total de la composition

Le diluant 1 éventuellement présent dans la composition est avantageusement choisi parmi les α oléfines notamment celles comportant de 4 à 15 atomes de carbone par molécule.

D'autres additifs fonctionnels peuvent être incorporés dans la composition. Ces additifs peuvent être choisis parmi les charges telles que par exemple des microbilles de verre, des agents anti-brouillard **J** ou anti-"misting" bien connus dans le domaine technique.

La préparation de la composition silicone selon l'invention, utilisable notamment comme base d'enduction pour la réalisation de revêtements anti-adhérents et hydrofuges, cette composition étant du type de celle définie ci-dessus, consiste simplement à mélanger les constituants selon l'invention à l'aide de moyens et de méthodologies de mélange connus de l'homme de l'art.

Ces compositions peuvent aussi être utilisées éventuellement pour le traitement de supports papier, pour apporter des propriétés d'anti-adhérence et avec une résistance améliorée du revêtement silicone vis-à-vis d'adhésifs agressifs (par exemple certains adhésifs sensibles à la pression "PSA: pressure sensitive adhesive" acryliques).

Sur le plan quantitatif, il est avantageux, selon l'invention, que la concentration en additif **X** réticulant et promoteur d'accrochage [exprimée en % en poids par rapport à la masse totale de la composition] soit comprise entre 0,1 et 40, de préférence entre 0,5 et 20, et, plus préférentiellement encore entre 1 et 18.

Un autre objet de l'invention concerne un élastomère silicone susceptible d'être obtenu par réticulation et/ou durcissement de la composition silicone **A** selon l'invention et telle que décrite ci-dessus.

Selon un autre de ses aspects, l'invention concerne un procédé de réalisation d'un revêtement, hydrofuge et anti-adhérent sur un support caractérisée en ce qu'il consiste à appliquer sur au moins une face de ce support au moins une couche de la composition silicone **A** selon l'invention et telle que décrite ci-dessus et à faire en sorte que cette couche réticule, de préférence en l'activant par chauffage.

La composition silicone **A** selon l'invention peut être déposée sur des supports souples papier ou polymère. Par exemple comme support souple on peut citer : les films de polymère tels que les polyoléfines (e.g. polyéthylène, polypropylène...), les polyesters (e.g. PET ...), les papiers de types divers (supercalendré, couché...), les cartons, les feuilles de cellulose ou les feuilles en métal. Les supports souples en polyester par exemple du genre PET revêtus d'une couche anti-adhérente en silicone, sont utilisés comme "liners" pour des étiquettes adhésives.

Les moyens et les méthodologies de mélange sont connus de l'homme de l'art, qu'il s'agisse de compositions sans solvant ou d'émulsion.

Ces compositions peuvent être appliquées à l'aide de dispositifs utilisés sur les machines industrielles d'enduction du papier tels qu'une tête d'enduction à cinq rouleaux, des systèmes à lames d'air ou à barre égalisatrice, sur des supports ou matériaux souples, puis durcies par circulation dans des fours-tunnels chauffés à 70-200°C ; le temps de passage dans ces fours est fonction de la température ; celui-ci est généralement de l'ordre de 5 à 15 secondes à une température de l'ordre de 100°C et de l'ordre de 1,5 à 3 secondes à une température de l'ordre de 180°C.

Lesdites compositions peuvent être déposées sur tout matériau ou substrat souple tel que papiers de types divers (supercalendré, couché...), cartons, feuilles de cellulose, feuilles en métal, films de matière plastique (polyester, polyéthylène, polypropylène...).

Les quantités de compositions déposées sont de l'ordre de 0,5 à 2 g par m² de surface à traiter, ce qui correspond au dépôt de couches de l'ordre de 0,5 à 2 µm.

Les matériaux ou supports ainsi enduits peuvent ultérieurement être mis en contact avec des matières adhésives quelconques caoutchoucs, acryliques ou autres, sensibles à la pression. La matière adhésive est alors aisément détachable dudit support ou matériau.

Selon un autre de ses aspects, l'invention concerne un procédé de réalisation d'un revêtement, hydrofuge et anti-adhérent sur un support, de préférence un film polymère, plus préférentiellement un film polymère en polyester, caractérisé en ce qu'il consiste à appliquer sur ce support au moins une couche d'une composition silicone telle que définie ci-dessus, et à faire en sorte que cette couche réticule, de préférence en l'activant par chauffage.

Ces compositions peuvent être appliquées à l'aide de dispositifs utilisés sur les machines industrielles d'enduction du papier tels qu'une tête d'enduction par exemple à cinq rouleaux, des systèmes à lames d'air ou à barre égalisatrice, sur des supports ou matériaux souples, puis durcies par circulation dans des fours-tunnels chauffés à 70-200°C; le temps de passage dans ces fours est fonction de la température ; celui-ci est généralement de l'ordre de 5 à 15 secondes à une température de l'ordre de 100°C et de l'ordre de 1,5 à 3 secondes à une température de l'ordre de 180°C.
Les quantités de compositions déposées sont par exemple de l'ordre de 0,5 à 2 g par m² de surface à traiter, ce qui correspond au dépôt de couches de l'ordre de 0,5 à 2 µm.

Les matériaux ou supports ainsi enduits peuvent ultérieurement être mis en contact avec des matières adhésives quelconques caoutchoucs, acryliques ou autres, sensibles à la pression. La matière adhésive est alors aisément détachable dudit support ou matériau.

Selon l'invention, pour la réticulation du revêtement, le support enduit avec la composition silicone polyaddition est placé à une température de préférence inférieure ou égale à 180°C pendant moins de 10 secondes.

Selon un autre de ses objets, l'invention vise également un support caractérisé en ce qu'il comporte au moins un revêtement, hydrofuge et anti-adhérent obtenu selon le procédé selon l'invention et tel que décrit ci-dessus ou à partir de composition silicone **A** selon l'invention et telle que décrite ci-dessus.

De préférence le support est un support souple choisi parmi le groupe constitué par un papier, un film polymère de type polyoléfine, polypropylène, polyéthylène ou polyester, et un film polymère de protection de la face adhésive d'un élément autocollant ou adhésif sensible à la pression.

Les revêtements silicone anti-adhérents selon l'invention sont bien et durablement accrochés sur les supports souples, même dans des conditions drastiques d'humidité et de température, et au contact prolongé avec un adhésif acrylique. Ils sont réticulés/durcis (peu d'extractibles). Ils ont un profil de force de décollement tel que la force de pelage reste élevée même à grande vitesse (bonne anti-adhérence). Ils sont lisses et transparents, ce qui finit de faire d'eux des supports d'étiquettes performants.

Les exemples suivants sont donnés à titre indicatif et ne peuvent être considérés comme une limite du domaine et de l'esprit de l'invention.

### EXEMPLES:

### I- Préparation des polyorganosiloxanes utilisés dans les additifs d'accrochage :

### Exemple 1 : Préparation d'un polyorganosiloxane C1 (fonctionnalisé Si-époxy et SiH) - Invention

Dans un réacteur de 1 L, on introduit 200 g de toluène et 1,80 g de Pt/C (1.5% en platine). Ce mélange est placé sous agitation et on chauffe à 80°C. Un mélange d'allyl glycidyl ether (AGE) (53 g, 0,465 mol) et de polydiméthylméthylhydrogénosiloxane (500 g, SiH = 1,75 mol) est ajouté goutte-à-goutte pendant ½ heure. Lorsque l'ajout est terminé, le chauffage est maintenu pendant 1 heure. Puis le chauffage est arrêté et après retour à température ambiante, le milieu réactionnel est filtré pour éliminer le Pt/C. Enfin, le milieu réactionnel est dévolatilisé à 80°C sous 10 mbars pendant 3 heures pour conduire à une huile silicone fonctionnalisée (516 g - Rdt : 93%) avec les caractéristiques suivantes: [SiH] = 0,25 mol/100g ; **[Epox] = 75 mmol/100g ;** Viscosité = 13 cP.

### Exemple 2 : Préparation d'un polyorganosiloxane C2 (fonctionnalisé Si-époxy et SiH) - Invention

Dans un réacteur de 500 mL, on introduit 100 g de toluène et 0,51 g de Pt/C (1.5% en platine). Ce mélange est placé sous agitation et on chauffe à 80°C. Un mélange d'allyl glycidyl ether (AGE) (17,5 g, 0,153 mol) et du polydiméthylméthylhydrogénosiloxane (150 g, SiH = 1,02 mol) est ajouté goutte-à-goutte pendant ½ heure. Lorsque l'ajout est terminé, le chauffage est maintenu pendant 1 heure. Puis le chauffage est arrêté et après retour à température ambiante, le milieu réactionnel est filtré pour éliminer le Pt/C. Enfin, le milieu réactionnel est dévolatilisé à 80°C sous 10 mbars pendant 2 heures pour conduire à une huile silicone fonctionnalisée (150 g - Rdt : 90%) avec les caractéristiques suivantes : [SiH] = 0,53 mol/100g ; **[Epox] = 71 mmol/100g ;** Viscosité = 21 cP.

### Exemple 3 : Préparation d'un additif d'accrochage Comp.1 (fonctionnalisé Si-époxy et SiH) - Comparatif

Dans un réacteur de 500 mL, on introduit 100 g de toluène et 0,64 g de Pt/C (1.5% en platine). Ce mélange est placé sous agitation et on chauffe à 80°C. Un mélange d'allyl glycidyl ether (AGE) (47,8 g, 0,419 mol) et d'un polydiméthylméthylhydrogénosiloxane (150 g, SiH = 1,02 mol) est ajouté goutte-à-goutte pendant ½ heure. Lorsque l'ajout est terminé, le chauffage est maintenu pendant 1 heure. Puis le chauffage est arrêté et après retour à température ambiante, le milieu réactionnel est filtré pour éliminer le Pt/C. Enfin, le milieu réactionnel est dévolatilisé à 80°C sous 10 mbars pendant 2 heures pour conduire à une huile silicone fonctionnalisée (169,2 g - Rdt : 85%) avec les caractéristiques suivantes : [SiH] = 0,33 mol/100g ; **[Epox] = 181 mmol/100g ;** Viscosité = 47 cP.

### Exemple 4 : Préparation d'un polyorganosiloxane C3 (fonctionnalisé Si-époxy et

### SiH) - Invention

Dans un réacteur de 500 mL, on introduit 100 g de toluène et 0,52 g de Pt/C (1.5% en platine). Ce mélange est placé sous agitation et on chauffe à 80°C. Un mélange d'allyl glycidyl ether (AGE) (12,8 g, 0,112 mol) et d'un polydiméthylméthylhydrogénosiloxane (150 g, SiH = 1,59 mol) est ajouté goutte-à-goutte pendant ½ heure. Lorsque l'ajout est terminé, le chauffage est maintenu pendant 1 heure. Puis le chauffage est arrêté et après retour à température ambiante, le milieu réactionnel est filtré pour éliminer le Pt/C. Enfin, le milieu réactionnel est dévolatilisé à 80°C sous 10 mbars pendant 2 heures pour conduire à une huile silicone fonctionnalisée (148 g - Rdt : 91%) avec les caractéristiques suivantes : [SiH] = 0,96 mol/100g ; **[Epox] = 43 mmol/100g ;** Viscosité = 17 cP.

### Exemple 5 : Préparation d'un additif d'accrochage Comp.2 (fonctionnalisé Si-époxy

### et SiH) - Comparatif

Dans un réacteur de 500 mL, on introduit 100 g de toluène et 0,60 g de Pt/C (1.5% en platine). Ce mélange est placé sous agitation et on chauffe à 80°C. Un mélange d'allyl glycidyl ether (AGE) (36,4 g, 0,319 mol) et d'un polydiméthylméthylhydrogénosiloxane (150 g, SiH = 1,59 mol) est ajouté goutte-à-goutte pendant ½ heure. Lorsque l'ajout est terminé, le chauffage est maintenu pendant 1 heure. Puis le chauffage est arrêté et après retour à température ambiante, le milieu réactionnel est filtré pour éliminer le Pt/C. Enfin, le milieu réactionnel est dévolatilisé à 80°C sous 10 mbars pendant 2 heures pour conduire à une huile silicone fonctionnalisée (171,5 g - Rdt : 92%) avec les caractéristiques suivantes : [SiH] = 0,74 mol/100g ; **[Epox] = 128 mmol/100g ;** Viscosité = 30 cP.

### Exemple 6 : Préparation d'un polyorganosiloxane C4 (fonctionnalisé Si-époxy et SiH) - Invention

Dans un réacteur de 1 L, on introduit 200 g de toluène et 0,85 g de Pt/C (1.5% en platine). Ce mélange est placé sous agitation et chauffé à 80°C. Un mélange d'allyl glycidyl ether (AGE) (36 g, 0,317 mol) et de polyméthylhydrogénosiloxane (423 g, SiH = 6,3 mol) est ajouté goutte-à-goutte pendant ½ heure. Lorsque l'ajout est terminé, le chauffage est maintenu pendant 1 heure. Puis le chauffage est arrêté et après retour à température ambiante, le milieu réactionnel est filtré pour éliminer le Pt/C. Enfin, le milieu réactionnel est dévolatilisé à 80°C sous 10 mbars pendant 3 heures pour conduire à une huile silicone fonctionnalisée (400g - Rdt : 87%) avec les caractéristiques suivantes : [SiH] = 1,33 mol/100g ; **[Epox] = 40 mmol/100g ;** Viscosité = 15 cP ;

### Exemple 7 : Préparation d'un additif d'accrochage Comp.3 (fonctionnalisé Si-époxy et SiH) - Comparatif

Dans un réacteur de 500 mL, on introduit 50 g de toluène et 0,40 g de Pt/C (1.5% en platine). Ce mélange est placé sous agitation et on chauffe à 80°C. Un mélange d'allyl glycidyl ether (AGE) (23,1 g, 0,203 mol) et de polyméthylhydrogénosiloxane (100 g, SiH = 1,35 mol) est ajouté goutte-à-goutte pendant ½ heure. Lorsque l'ajout est terminé, le chauffage est maintenu pendant 1 heure. Puis le chauffage est arrêté et après retour à température ambiante, le milieu réactionnel est filtré pour éliminer le Pt/C. Enfin, le milieu réactionnel est dévolatilisé à 80°C sous 10 mbars pendant 2 heures pour conduire à une huile silicone fonctionnalisée (108,5 g - Rdt : 88%) avec les caractéristiques suivantes : [SiH] = 0,96 mol/100g ; [Epox] = 116 mmol/100g ; Viscosité = 12 cP.

**Tableau 1 : Récapitulatif des additifs d'accrochage**

| | Additif d'accrochage | [SiH] mol/100g du polyorganosiloxane de l'additif | [Epoxy] mmol/100g du polyorganosiloxane de l'additif | Viscosité (m.Pa.s) |
|---|---|---|---|---|
| Exemple 1 Invention | C1 | 0,25 | 75 | 13 |
| Exemple 2 Invention | C2 | 0,53 | 71 | 21 |
| Exemple 3 Comparatif | Comp.1 | 0,33 | 181 | 47 |
| Exemple 4 Invention | C3 | 0,96 | 43 | 17 |
| Exemple 5 Comparatif | Comp.2 | 0,74 | 128 | 30 |
| Exemple 6 Invention | C4 | 1,33 | 40 | 15 |
| Exemple 7 Comparatif | Comp.3 | 0,96 | 116 | 12 |

### II- Préparation des additifs d'accrochage = mélanges d'une huile silicone réticulante D + polyorganosiloxane C :

### Exemple 8 :

Dans cet exemple, les additifs **X** sont préparés à partir de 5 g d'une huile silicone réticulante D (polyméthylhydrogénosiloxane, concentration = 0,96 mol SiH/100g d'huile) et de 100 mg de polyorganosiloxane C (fonctionnalisé Si-époxy et SiH). L'aspect du mélange obtenu est précisé dans le Tableau 2 ci-dessous :

**Tableau 2**

| Additif d'accrochage | [Epoxy] mmol/100g du polyorganosiloxane de l'additif | Aspect des mélanges huile silicone réticulante D + polyorganosiloxane C (fonctionnalisé Si-époxy et SiH) |
|---|---|---|
| C1 Invention | 75 | Limpide et homogène sans problème de démixion |
| C2 Invention | 71 | Limpide et homogène sans problème de démixion |
| Comp.1 Comparatif | 181 | Opaque et avec démixion au stockage |
| C3 Invention | 43 | Limpide et homogène sans problème de démixion |
| Comp.2 Comparatif | 128 | Opaque et avec démixion au stockage |
| C4 Invention | 40 | Limpide et homogène sans problème de démixion |
| Comp.3 Comparatif | 116 | Opaque et avec démixion au stockage |

### III- Exemple 9 : Essais d'application 1 - Conditions d'enduction et réticulation avec les additifs d'accrochage :

Toutes les enductions ont été réalisées sur une machine d'enduction ROTOMEC à 5 cylindres, avec réticulation du silicone déposé sur un support papier (Glassine - Ahlstrom 2010 Classic Yellow / Four : 120°C / Vitesse : 100 m/min) avec un dépôt allant de 0,3 et 1 g/m²_{.}

Une fois sorti de la machine d'enduction le papier siliconé est soumis au contrôle de l'adhérence et de la résistance à l'abrasion du revêtement selon le test de Rub-off décrit plus loin, ainsi qu'à la teneur en extractibles (fraction silicone non réticulée) laquelle permet de caractériser la réactivité du système.

Puis, on réalise un test de vieillissement qui consiste à placer le papier siliconé dans une étuve climatique à 50°C / 70% d'humidité (vieillissement accéléré) afin de suivre au cours du temps l'évolution de la résistance à l'abrasion.

La fraction de silicone extractible à la MIBK (méthylisobutyle cétone), c'est-à-dire le taux de silicone non réticulé, est déterminée par absorption atomique en dosant le silicium dans le solvant d'extraction.

La mesure de « Rub-Off » pour vérifier l'adhérence sur le support et la résistance à l'abrasion de la couche silicone consiste à frotter l'index sur le support siliconé pour imposer à la couche des contraintes mécaniques. On note le nombre d'aller-retour avec le doigt jusqu'à apparition du phénomène de rub-off (ou gommage), correspondant à une déchirure en lambeaux du revêtement silicone. La note de 1 indique une mauvaise résistance à l'abrasion de la couche silicone ; la note de 10 indique une excellente résistance à l'abrasion de la couche silicone.

Les résultats sont consignés dans le Tableau 3.

**Tableau 3**

| Composants de la composition silicone enduite | Comparatif | Comparatif | Invention | Invention |
|---|---|---|---|---|
| Huile vinylée (viscosité 350 mPa.s) (partie en poids) | 100 | 100 | 100 | 100 |
| Huile silicone réticulante D (partie en poids) | 4,15 | 4,15 | 4,15 | 4,15 |
| Polyorganosiloxane C1 (fonctionnalisé Si-époxy et SiH) (partie en poids) | | | 1 | |
| Polyorganosiloxane C2 (fonctionnalisé Si-époxy et SiH) (partie en poids) | | | | 1 |
| Ratio molaire motif [SiH]/[SiVinyle] | 2 | 2 | 2 | 2 |
| Catalyseur au Pt (ppm) | 90 | 50 | 50 | 50 |

| Résultats | | | | |
|---|---|---|---|---|
| Extractibles (%) | 7,9 | 9,1 | 6,2 | 8,3 |
| Rub-Off sortie machine | 10 | 10 | 10 | 10 |
| Rub-Off après stockage 7 jours à 50°C et 70% d'humidité | 10 | 2 | 10 | 10 |
| Rub-Off après stockage 14 jours à 50°C et 70% d'humidité | 3 | 1 | 10 | 10 |

### IV- Exemple 10 - Essais d'application 2 - Conditions d'enduction et réticulation avec les additifs d'accrochage :

On répète les essais de l'exemple 9 mais en changeant le support et les conditions de réticulation.
Support Film: Film PET/ Four : 180°C / "Dwell time": 3,6 s / Dépôt : de 0,3 à 1 g/m²

**Tableau 4**

| Composants de la composition silicone enduite | Comparatif | Comparatif | Invention |
|---|---|---|---|
| Huile vinylée (viscosité 400 mPa.s) (partie en poids) | 100 | 100 | 100 |
| Huile silicone réticulante D (partie en poids) | 7,1 | 7,1 | 5,6 |
| Polyorganosiloxane C4 (fonctionnalisé Si-époxy et SiH) (partie en poids) | | | 2 |
| Silane C2 (fonctionnalisé Si-époxy, Coatosil^{®}1770, vendu par la société Momentive) (partie en poids) | | 2 | |
| Ratio molaire motif [SiH]/[SiVinyle] | 3 | 3 | 3 |
| Catalyseur au Pt (ppm) | 120 | 120 | 120 |
| | | | |
| Extractibles (%) | 4,4 | 4,5 | 4,8 |
| Rub-Off sortie machine | 10 | 10 | 10 |
| Rub-Off après stockage 7 jours à 50°C et 70% d'humidité | 1 | 4 | 10 |
| Rub-Off après stockage 14 jours à 50°C et 70% d'humidité | 1 | 4 | 10 |

## Revendications

1. Composition silicone **A** comprenant une base silicone **B** susceptible de réticuler ou durcir par polyaddition **caractérisée en ce qu'**elle comprend au moins un additif **X** réticulant et promoteur d'accrochage comprenant au moins un polyorganosiloxane **C** constitué des motifs siloxyles **(I.1)** à **(I.3)** de formules suivantes: 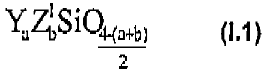 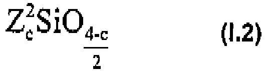 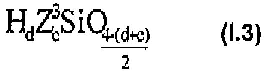 dans lesquelles :
- a= 1 ou 2, b= 0, 1 ou 2 et a+b= 1, 2 ou 3;
- c= 1, 2 ou 3
- d= 1 ou 2, e = 0, 1 ou 2 et d+e= 1, 2 ou 3
- Y représente indépendamment un groupe hydrocarboné époxyfonctionnel comprenant éventuellement un ou plusieurs hétéroatomes tel qu'un atome d'oxygène, de préférence ayant de 2 à 20 atomes de carbone inclus, et, plus préférentiellement encore choisi parmi le groupe constitué par un alkylglycidyléther, un époxyalkyle linéaire, ramifié et/ou cyclique, un époxyalcényle linéaire, ramifié et/ou cyclique et un glycidyl-ester d'acide carboxylique;
- Z¹, Z² et Z³ représentent, indépendamment les uns des autres, un groupe monovalent hydrocarboné ayant de 1 à 30 atomes de carbone et éventuellement substitués par un ou plusieurs hétéroatomes et de préférence choisi parmi le groupe constitué par les groupes allyles ayant de 1 à 8 atomes de carbone inclus et les groupes aryles, et encore plus préférentiellement choisi parmi le groupe constitué par un radical méthyle, méthyle, propyle, 3,3,3-trifluoropropyle, xylyle, tolyle et phényle,
- ledit polyorganosiloxane **C** comprenant, par molécule, au moins un motif siloxyle **(I.1)** porteurs de groupes hydrocarbonés époxyfonctionnels et au moins trois motifs siloxyles **(I.3)** porteurs de groupes hydrogénosiloxyles, et
- la teneur en motifs siloxyles **(I.1)** est comprise entre 10 et 80 mmol pour 100 g de polyorganosiloxane **C,** et encore plus préférentiellement comprise entre 20 et 60 mmol pour 100g de polyorganosiloxane **C.**

2. Composition silicone **A** selon la revendication **1 caractérisé en ce que** la teneur en motifs siloxyles **(I.3)** est inférieure ou égale à 1,6 mole pour 100 g de polyorganosiloxane **C** et de préférence compris entre 0,1 et 1,5 mole pour 100 g de polyorganosiloxane **C,**

3. Composition silicone **A** selon la revendication **1 caractérisée en ce que** le nombre **N1** de motifs siloxyles **(I.1)** porteurs de groupes hydrocarbonés époxyfonctionnels et le nombre **N3** de motifs siloxyles **(I.3)** répondent aux conditions suivante
- 1 **≤ N1 ≤** 10 et de préférence 1 **≤ N1 ≤** 5, et
- 3 ≤ **N3 ≤** 20 et de préférence 5 ≤ **N3 ≤** 20

4. Composition silicone **A** selon la revendication **1 caractérisée en ce que** le nombre total **N** de motifs siloxyles **(1.1), (I.2)** et **(I.3)** du polyorganosiloxane **C** est compris entre 10 et 25.

5. Composition silicones **A** selon la revendication **1 caractérisé en ce que** l'additif **X** promoteur d'accrochage est un mélange limpide et homogène qui comprend par rapport au poids total de l'additif **X**:
- de 1 à 100 parties en poids d'au moins un polyorganosiloxane **C,** et
- de 99 à 0 parties en poids d'au moins une huile silicone réticulante **D** comprenant par molécule, au moins trois atomes d'hydrogène liés au silicium.

6. Composition silicone **A** selon l'une quelconque des revendications précédentes **caractérisée en ce que** la base silicone **B** comprend :
(A) au moins un polyorganosiloxane alcénylée **E** comprenant au moins deux motifs siloxyles **(1.4)** de formule suivante : 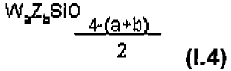
- dans laquelle :
- a= 1 ou 2, b= 0, ou 2 et a+b= 1, 2 ou 3;
- W représente indépendamment un groupe alcényle, de préférence ayant de 2 à 6 atomes de carbone et, plus préférentiellement encore un groupe vinyle ou allyle, et
- Z représente représentent, indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle,
(B) éventuellement au moins huile silicone réticulante **D'** comprenant par molécule, au moins trois atomes d'hydrogène liés au silicium,
(C) au moins un catalyseur **F** de polyaddition, de préférence un composé d'au moins un métal appartenant au groupe du platine;
(D) éventuellement au moins un inhibiteur de réticulation **G** ;
(E) éventuellement un système modulateur d'adhérence **H** ;
(F) éventuellement au moins un diluant **I**;
(G) éventuellement au moins un additif anti-brouillard **J**,
(H) éventuellement au moins une résine polyorganosiloxane **K**, et
(I) éventuellement au moins un polyorganosiloxane **L** non fonctionnalisé constitués des motifs siloxyles **(I.5)** de formule : 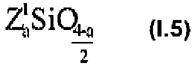 dans laquelle :
- a= 0, 1, 2 ou 3,
- Z¹ représente, indépendamment un groupe hydrocarboné monovalent ayant de à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle,

7. Composition silicone **A** selon la revendication **1 caractérisé en ce que** pour le motif siloxyle (I.1) Y est choisi parmi le groupe constitué par les groupements **(R-1)** à **(R-4)** de formules suivantes :

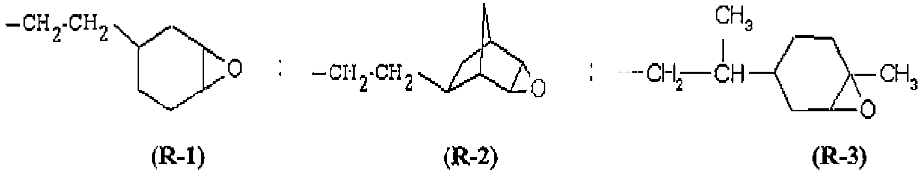

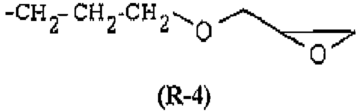

8. Composition silicone **A** selon la revendication 7 **caractérisé en ce que** pour le motif siloxyle **(I.1)** Y est le groupement **(R-4)** de formule suivante :

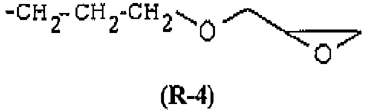

9. Composition silicone **A** selon l'une quelconque des revendications précédentes dans laquelle les quantités des constituants sont telles que le rapport molaire [≡SiH]/[≡SiAlcényle] est compris entre 1 et 7 et de préférence entre 1 et 5 avec :
- [SiH]= nombre total de mole de motifs siloxyles comprenant un atome d'hydrogène liés au silicium, et
- [SiAlcényle] = nombre total de mole de motifs siloxyles comprenant un radical alcényle liés au silicium.

10. Composition silicone **A** selon l'une quelconque des revendications précédentes dans laquelle le polyorganosiloxane **C** a une viscosité dynamique (à 25°C) comprise entre 5 et 100 mPa.s et de préférence entre 5 et 50 mPa.s.

11. Elastomère silicone susceptible d'être obtenu par réticulation et/ou durcissement de la composition silicone **A** telle que décrite selon l'une quelconque des revendications 1 à 10.

12. Procédé de réalisation d'un revêtement, hydrofuge et anti-adhérent sur un support **caractérisée en ce qu'**il consiste à appliquer sur au moins une face de ce support au moins une couche de la composition silicone **A** telle que décrite selon l'une quelconque des revendications 1 à 10 et à faire en sorte que cette couche réticule, de préférence en l'activant par chauffage.

13. Support **caractérisé en ce qu'**il comporte au moins un revêtement, hydrofuge et anti-adhérent obtenu selon le procédé telle que décrit dans la revendication 12 ou à partir de composition silicone **A** telle que décrite selon l'une quelconque des revendications 1 à 10.

14. Support selon la revendication 13 **caractérisé en ce qu'**il s'agit d'un support souple choisi parmi le groupe constitué par un papier, un film polymère de type polyoléfine, polypropylène, polyéthylène ou polyester, et un film polymère de protection de la face adhésive d'un élément autocollant ou adhésif sensible à la pression.

## Patentansprüche

1. Silikonzusammensetzung **A,** umfassend eine Silikonbasis **B,** die durch Polyaddition vernetzt oder gehärtet werden kann, **dadurch gekennzeichnet, dass** sie mindestens ein vernetzendes und haftungsförderndes Additiv **X** umfasst, das mindestens ein Polyorganosiloxan **C** mit den Siloxyleinheiten **(I.1)** bis **(1.3)** mit den folgenden Formeln umfasst: 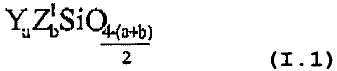 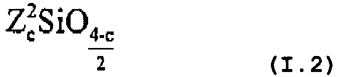 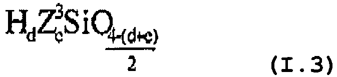 in denen:
- a = 1 oder 2, b = 0, 1 oder 2 und a+b = 1, 2 oder 3;
- c = 1, 2 oder 3
- d = 1 oder 2, e = 0, 1 oder 2 und d+e = 1, 2 oder 3
- Y unabhängig für eine epoxidfunktionelle Kohlenwasserstoffgruppe, die gegebenenfalls ein oder mehrere Heteroatome wie ein Sauerstoffatom umfasst, vorzugsweise 2 bis 20 Kohlenstoffatome inklusive aufweist und noch weiter bevorzugt aus der Gruppe bestehend aus einem Alkylglycidylether, einem linearen, verzweigten und/oder cyclischen Epoxyalkyl, einem linearen, verzweigten und/oder cyclischen Epoxyalkenyl und einem Carbonsäureglycidylester ausgewählt ist, steht;
- Z¹, Z² und Z³ unabhängig voneinander für eine einwertige Kohlenwasserstoffgruppe, die 1 bis 30 Kohlenstoffatome aufweist und gegebenenfalls durch ein oder mehrere Heteroatome substituiert ist und vorzugsweise aus der Gruppe bestehend aus Alkylgruppen mit 1 bis 8 Kohlenstoffatomen inklusive und Arylgruppen ausgewählt ist und noch weiter bevorzugt aus der Gruppe bestehend aus einem Methyl-, Ethyl-, Propyl-, 3,3,3-Trifluorpropyl-, Xylyl-, Tolyl- und Phenylrest ausgewählt ist, stehen,
- wobei das Polyorganosiloxan **C** pro Molekül mindestens eine Siloxyleinheit **(I.1)** mit epoxidfunktionellen Kohlenwasserstoffgruppen und mindestens 3 Siloxyleinheiten **(I.3)** mit Hydrogensiloxylgruppen umfasst und
- der Gehalt an Siloxyleinheiten **(I.1)** zwischen 10 und 80 mmol pro 100 g Polyorganosiloxan **C** und noch weiter bevorzugt zwischen 20 und 60 mmol pro 100 g Polyorganosiloxan **C** liegt.

2. Silikonzusammensetzung **A** nach Anspruch 1, **dadurch gekennzeichnet, dass** der Gehalt an Siloxyleinheiten **(I.3)** kleiner gleich 1,6 mol pro 100 g Polyorganosiloxan **C** ist und vorzugsweise zwischen 0,1 und 1,5 mol pro 100 g Polyorganosiloxan **C** liegt.

3. Silikonzusammensetzung **A** nach Anspruch 1, **dadurch gekennzeichnet, dass** die Zahl **N1** von Siloxyleinheiten **(I.1)** mit epoxidfunktionellen Kohlenwasserstoffgruppen und die Zahl **N3** von Siloxyleinheiten **(I.3)** die folgenden Bedingungen erfüllen:
- 1 ≤ **N1 ≤**10 und vorzugsweise 1 ≤ **N1** ≤ 5 und
- 3 ≤ **N3 ≤** 20 und vorzugsweise 5 ≤ **N3** ≤ 20.

4. Silikonzusammensetzung **A** nach Anspruch 1, **dadurch gekennzeichnet, dass** die Gesamtzahl **N** von Siloxyleinheiten **(I.1), (I.2)** und **(I.3)** des Polyorganosiloxans **C** zwischen 10 und 25 liegt.

5. Silikonzusammensetzung **A** nach Anspruch 1, **dadurch gekennzeichnet, dass** es sich bei dem haftungsfördernden Additiv **X** um eine klare und homogene Mischung handelt, die, bezogen auf das Gesamtgewicht des Additivs **X:**
- 1 bis 100 Gewichtsteile mindestens eines Polyorganosiloxans **C** und
- 99 bis 0 Gewichtsteile mindestens eines vernetzenden Silikonöls **D,** das pro Molekül mindestens drei siliciumgebundene Wasserstoffatome umfasst,
umfasst.

6. Silikonzusammensetzung **A** nach einem der vorhergehenden Ansprüche, **dadurch gekennzeichnet, dass** die Silikonbasis **B** Folgendes umfasst:
(A) mindestens ein Alkenylpolyorganosiloxan **E** mit mindestens zwei Siloxyleinheiten **(1.4)** der folgenden Formel: 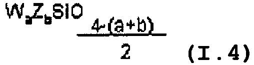
- in der:
- a = 1 oder 2, b = 0, 1 oder 2 und a+b = 1, 2 oder 3;
- W unabhängig für eine Alkenylgruppe, die vorzugsweise 2 bis 6 Kohlenstoffatome aufweist, und noch weiter bevorzugt eine Vinyl- oder Allylgruppe steht und
- Z unabhängig für eine einwertige Kohlenwasserstoffgruppe, die 1 bis 30 Kohlenstoffatome aufweist und vorzugsweise aus der Gruppe bestehend aus Alkylgruppen mit 1 bis 8 Kohlenstoffatomen inklusive und Arylgruppen ausgewählt ist und noch weiter bevorzugt aus der Gruppe bestehend aus einem Methyl-, Ethyl-, Propyl-, 3,3,3-Trifluorpropyl-, Xylyl-, Tolyl- und Phenylrest ausgewählt ist, steht stehen,
(B) gegebenenfalls mindestens vernetzendes Silikonöl **D',** das pro Molekül mindestens drei siliciumgebundene Wasserstoffatome umfasst,
(C) mindestens einen Polyadditionskatalysator **F,** vorzugsweise eine Verbindung mindestens eines Metalls der Platingruppe;
(D) gegebenenfalls mindestens einen Vernetzungsinhibitor **G;**
(E) gegebenenfalls ein adhäsionsmodulierendes System **H;**
(F) gegebenenfalls mindestens ein Verdünnungsmittel **I;**
(G) gegebenenfalls mindestens ein Antibeschlagadditiv **J,**
(H) gegebenenfalls mindestens ein Polyorganosiloxanharz **K und**
(I) gegebenenfalls mindestens ein nicht funktionalisiertes Polyorganosiloxan **L,** das aus den Siloxyleinheiten **(1.5)** der folgenden Formel besteht: 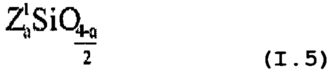 in der:
- a = 0, 1, 2 oder 3,
- Z¹ unabhängig für eine einwertige Kohlenwasserstoffgruppe, die 1 bis 30 Kohlenstoffatome aufweist und vorzugsweise aus der Gruppe bestehend aus Alkylgruppen mit 1 bis 8 Kohlenstoffatomen inklusive und Arylgruppen ausgewählt ist und noch weiter bevorzugt aus der Gruppe bestehend aus einem Methyl-, Ethyl-, Propyl-, 3,3,3-Trifluorpropyl-, Xylyl-, Tolylund Phenylrest ausgewählt ist, steht.

7. Silikonzusammensetzung **A** nach Anspruch 1, **dadurch gekennzeichnet, dass** für die Siloxyleinheit **(I.1)** Y aus der Gruppe bestehend aus den Gruppen **(R-1)** bis **(R-4)** der folgenden Formeln ausgewählt ist:

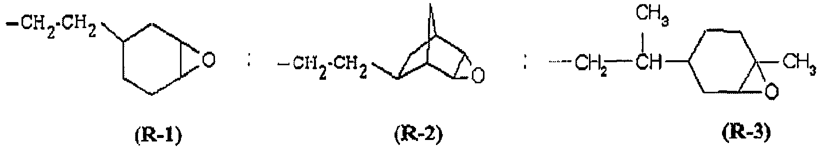

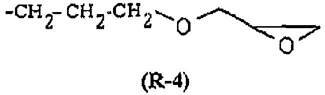

8. Silikonzusammensetzung **A** nach Anspruch 7, **dadurch gekennzeichnet, dass** für die Siloxyleinheit **(I.1)** Y die Gruppe **(R-4)** der folgenden Formel ist:

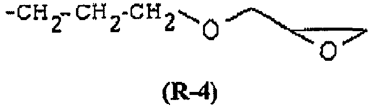

9. Silikonzusammensetzung **A** nach einem der vorhergehenden Ansprüche, wobei die Mengen der Bestandteile so bemessen sind, dass das [≡SiH]/[≡SiAlkenyl]-Molverhältnis zwischen 1 und 7 und vorzugsweise zwischen 1 und 5 liegt, wobei:
- [SiH] = Gesamtmolzahl von Siloxyleinheiten mit einem siliciumgebundenen Wasserstoffatom und
- [SiAlkenyl] = Gesamtmolzahl von Siloxyleinheiten mit einem siliciumgebundenen Alkenylrest.

10. Silikonzusammensetzung **A** nach einem der vorhergehenden Ansprüche, wobei das Polyorganosiloxan **C** eine dynamische Viskosität (bei 25°C) zwischen 5 und 100 mPa.s und vorzugsweise zwischen 5 und 50 mPa.s aufweist.

11. Silikonelastomer, das durch Vernetzung und/oder Härtung der Silikonzusammensetzung **A** gemäß einem der Ansprüche 1 bis 10 erhältlich ist.

12. Verfahren zur Herstellung einer wasserabweisenden und antihaftenden Beschichtung auf einen Träger, **dadurch gekennzeichnet, dass** es darin besteht, dass man auf mindestens eine Fläche dieses Trägers mindestens eine Schicht der Silikonzusammensetzung **A** gemäß einem der Ansprüche 1 bis 10 aufbringt und gewährleistet, dass diese Schicht vernetzt, vorzugsweise durch Aktivierung durch Erhitzen.

13. Träger, **dadurch gekennzeichnet, dass** er mindestens eine nach dem Verfahren gemäß Anspruch 12 oder aus Silikonzusammensetzung **A** gemäß einem der Ansprüche 1 bis 10 erhaltene wasserabweisende und antihaftende Beschichtung aufweist.

14. Träger nach Anspruch 13, **dadurch gekennzeichnet, dass** es sich um einen flexiblen Träger aus der Gruppe bestehend aus Papier, einer Polymerfolie vom Polyolefin-, Polypropylen-, Polyethylen- oder Polyestertyp und einer Polymerfolie zum Schutz der Klebefläche eines Selbstklebe- oder Haftklebeelements handelt.

## Claims

1. Silicone composition **A** comprising a silicone base **B** capable of cross-linking or hardening by polyaddition, **characterized in that** it comprises at least one cross-linking and attachment-promoting additive **X** comprising at least one polyorganosiloxane **C** consisting of the siloxyl units **(I.1)** to **(1.3)** having the following formulae: 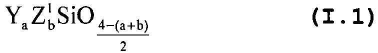 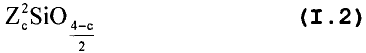 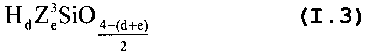 in which:
- a = 1 or 2, b = 0, 1 or 2 and a+b = 1, 2 or 3;
- c = 1, 2 or 3
- d = 1 or 2, e = 0, 1 or 2 and d+e = 1, 2 or 3
- Y independently represents an epoxyfunctional hydrocarbon group optionally comprising one or more heteroatoms such as an oxygen atom, preferably having from 2 to 20 carbon atoms inclusive, and, more preferably still, chosen from the group consisting of an alkyl glycidyl ether, a linear, branched and/or cyclic epoxyalkyl, a linear, branched and/or cyclic epoxyalkenyl and a carboxylic acid glycidyl ester;
- Z¹, Z² and Z³ represent, independently of each other, a monovalent hydrocarbon group having from 1 to 30 carbon atoms and optionally substituted by one or more heteroatoms and preferably chosen from the group consisting of alkyl groups having from 1 to 8 carbon atoms inclusive and aryl groups, and, more preferably still, chosen from the group consisting of a methyl, ethyl, propyl, 3,3,3-trifluoropropyl, xylyl, tolyl and phenyl radical,
- said polyorganosiloxane **C** comprising, per molecule, at least one siloxyl unit **(1.1)** bearing epoxyfunctional hydrocarbon groups and at least three siloxyl units **(1.3)** bearing hydrogenosiloxyl groups, and
- the content of siloxyl units **(I.1)** is between 10 and 80 mmol per 100 g of polyorganosiloxane **C,** and more preferably still between 20 and 60 mmol per 100 g of polyorganosiloxane **C.**

2. Silicone composition **A** according to Claim **1, characterized in that** the content of siloxyl units **(1.3)** is less than or equal to 1.6 mol per 100 g of polyorganosiloxane **C** and preferably between 0.1 and 1.5 mol per 100 g of polyorganosiloxane **C.**

3. Silicone composition **A** according to Claim **1, characterized in that** the number **N1** of siloxyl units **(I.1)** bearing epoxyfunctional hydrocarbon groups and the number **N3** of siloxyl units **(1.3)** satisfy the following conditions:
- 1 ≤ **N1** ≤ 10 and preferably 1 ≤ **N1** ≤ 5, and
- 3 ≤ **N3** 20 and preferably 5 ≤ **N3** ≤ 20

4. Silicone composition **A** according to Claim **1, characterized in that** the total number **N** of siloxyl units **(I.1), (I.2)** and **(I.3)** of the polyorganosiloxane **C** is between 10 and 25.

5. Silicone composition **A** according to Claim **1, characterized in that** the attachment-promoting additive **X** is a clear and homogeneous mixture which comprises, relative to the total weight of the additive **X:**
- from 1 to 100 parts by weight of at least one polyorganosiloxane **C,** and
- from 99 to 0 parts by weight of at least one cross-linking silicone oil **D** comprising per molecule at least three hydrogen atoms bonded to the silicon.

6. Silicone composition **A** according to any one of the preceding claims, **characterized in that** the silicone base **B** comprises:
(A) at least one alkenylated polyorganosiloxane **E** comprising at least two siloxyl units **(1.4)** having the following formula: 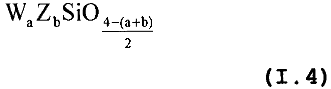
- in which:
- a = 1 or 2, b = 0, 1 or 2 and a+b = 1, 2 or 3;
- W independently represents an alkenyl group, preferably having from 2 to 6 carbon atoms and, more preferably still, a vinyl or allyl group, and
- Z independently represents represent a monovalent hydrocarbon group having from 1 to 30 carbon atoms and preferably chosen from the group consisting of alkyl groups having from 1 to 8 carbon atoms inclusive and aryl groups, and more preferably still chosen from the group consisting of a methyl, ethyl, propyl, 3,3,3-trifluoropropyl, xylyl, tolyl and phenyl radical,
(B) optionally at least cross-linking silicone oil **D'** comprising per molecule at least three hydrogen atoms bonded to the silicon,
(C) at least one polyaddition catalyst **F,** preferably a compound of at least one metal belonging to the platinum group;
(D) optionally at least one cross-linking inhibitor **G;**
(E) optionally an adhesion modulating system **H;**
(F) optionally at least one diluent **I;**
(G) optionally at least one anti-misting additive **J,**
(H) optionally at least one polyorganosiloxane resin **K,** and
(I) optionally at least one nonfunctionalized polyorganosiloxane **L** consisting of the siloxyl units **(I.5)** of formula: 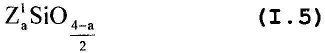 in which:
- a = 0, 1, 2 or 3,
- Z¹ independently represents a monovalent hydrocarbon group having from 1 to 30 carbon atoms and preferably chosen from the group consisting of alkyl groups having from 1 to 8 carbon atoms inclusive and aryl groups, and more preferably still chosen from the group consisting of a methyl, ethyl, propyl, 3,3,3-trifluoropropyl, xylyl, tolyl and phenyl radical.

7. Silicone composition **A** according to Claim **1, characterized in that** for the siloxyl unit **(I,1),** Y is chosen from the group consisting of the groups **(R-1)** to **(R-4)** having the following formulae:

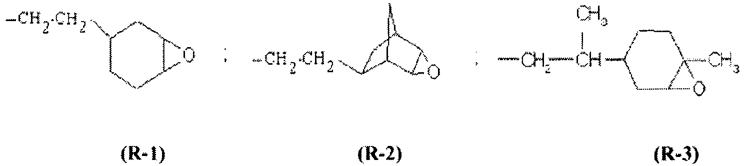

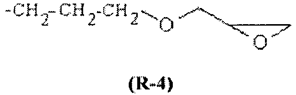

8. Silicone composition **A** according to Claim **7, characterized in that** for the siloxyl unit **(I.1)** Y is the group **(R-4)** having the following formula:

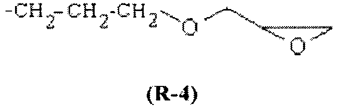

9. Silicone composition **A** according to any one of the preceding claims, in which the quantities of the constituents are such that the [≡SiH]/[≡SiAlkenyl] molar ratio is between 1 and 7, and preferably between 1 and 5 with:
- [SiH] = total number of mol of siloxyl units comprising a hydrogen atom bonded to the silicon, and
- [SiAlkenyl] = total number of mol of siloxyl units comprising an alkenyl radical bonded to the silicon.

10. Silicone composition **A** according to any one of the preceding claims, in which the polyorganosiloxane C has a dynamic viscosity (at 25°C) between 5 and 100 mPa.s and preferably between 5 and 50 mPa.s.

11. Silicone elastomer which can be obtained by the cross-linking and/or hardening of the silicone composition **A** as described according to any one of Claims 1 to 10.

12. Process for producing a non-stick and water-repellent coating on a substrate, **characterized in that** it consists in applying on at least one face of this substrate at least one layer of the silicone composition **A** as described according to any one of Claims 1 to 10 and in ensuring that this layer crosslinks, preferably by activating it by heating.

13. Substrate **characterized in that** it comprises at least one non-stick and water-repellent coating obtained according to the process as described in Claim 12 or from silicone composition **A** as described according to any one of Claims 1 to 10.

14. Substrate according to Claim 13, **characterized in that** it is a flexible substrate chosen from the group consisting of paper, a polymer film of the polyolefin, polypropylene, polyethylene or polyester type, and a polymer film for protecting the adhesive face of a self adhesive or pressure-sensitive adhesive element.
